# EUROPEAN PATENT APPLICATION

(11) **EP 1 498 763 A1**
(43) Date of publication of application: **19.01.2005**
(21) Application number: 04016299.2
(22) Date of filing: 10.07.2004
(51) Int. Cl.: G02B 26/08, G02B 26/02, G02B 6/35

(54) **Variable optical attenuator**

(30) Priority: 18.07.2003 KR 2003049193
(71) Applicant: LG ELECTRONICS INC., Seoul (KR)
(72) Inventor: Yee, Young Joo, Bundang-gu Seongnam-si Gyeonggi-do (KR); Jl, Chang Hyeon, Seocho-gu Seoul (KR)
(74) Representative: Vetter, Ewald Otto, Dipl.-Ing.

(57) **Abstract**

A variable optical attenuator is disclosed. The variable optical attenuator includes a substrate having a first groove, a second groove, and a third groove, an elastic body connected to a surface of the substrate and formed within the first groove, so as to be spaced apart from the inner surface of the first groove, a movable unit connected to the elastic body and formed within the second groove, so as to be spaced apart from the inner surface of the second groove, a micromirror connected to the movable unit and formed within the third groove, so as to be spaced apart from the inner surface of the third groove, input and output optical fibers formed on each side of the micromirror within the third groove and inputting and outputting light rays depending upon a displacement of the micromirror, and a coil formed on the movable unit having the elastic body formed thereon and moving the movable unit and the micromirror in a vertical direction depending upon external electrical signals, so as to control an intensity of light from the output optical fiber.

## Description

This application claims the benefit of Korean Application No. P10-2003-0049193, filed on July 18, 2003, which is hereby incorporated by reference as if fully set forth herein.

### BACKGROUND OF THE INVENTION

### Field of the Invention

The present invention relates to an optical switch used in an optical communication network, and more particularly, to a variable optical attenuator having a micromirror.

### Discussion of the Related Art

A wavelength division multiplexed optical communication system are widely developed and supplied in order to effectively transmit various forms of information that are currently in mass production.

In such optical communication systems, a plurality of types of information are stored in a plurality of light sources having each different wavelengths, which are then multiplexed in order to be transmitted through a single optical fiber. Then, a receiving terminal demultiplexes the multiplexed signals and divides the signal so as to receive the optical signals corresponding to each wavelength.

Meanwhile, since optical signals tend to be reduced when transmitting optical signals to a long distance, a plurality of optical amplifiers must be used inbetween transmissions. At this point, due to a difference in wavelengths depending upon the gains of optical amplifiers and the characteristics of a demultiplexer, each wavelength generates a different optical output.

When a plurality of different optical outputs is multiplexed, and when the multiplexed outputs are transmitted, then the optical output for each wavelength loses uniformity, thereby deteriorating the characteristics of the signals and ultimately disabling transmission of the signals.

Accordingly, a variable optical attenuator is required to allow the strength of the optical signals corresponding to each wavelength to be uniform.

Generally, an optical attenuator reduces the signals of wavelengths being different from the optical signal having the lowest wavelength.

Examples of the related art optical attenuator include a device mechanically moving optical fibers by using a monitor, a device using a micro-electromechanical system (MEMS) actuator, a device having a portion of an optical fiber grinded and a special material coated on the surface thereof, and a Mach-Zehnder interferometric modulator using a thermo-optic effect on a silica substrate.

However, devices such as the mechanical optical attenuator and the optical attenuator formed by grinding a portion of the optical fiber are disadvantageous in that the size of the devices is larger and integration with other optical devices cannot be performed. Additionally, the MEMS device and the optical attenuator using the silica device have problems of requiring high driving voltage and power.

### SUMMARY OF THE INVENTION

Accordingly, the present invention is directed to a variable optical attenuator that substantially obviates one or more problems due to limitations and disadvantages of the related art.

An object of the present invention is to provide a variable optical attenuator that is compact in size and lightweight.

Another object of the present invention is to provide a variable optical attenuator having a more simplified and easy fabrication process and a lower cost and allowing mass production.

A further object of the present invention is to provide a variable attenuator having a faster response speed and requiring lower driving power.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a variable optical attenuator includes a substrate having a first groove, a second groove, and a third groove, an elastic body connected to a surface of the substrate and formed within the first groove, so as to be spaced apart from the inner surface of the first groove, a movable unit connected to the elastic body and formed within the second groove, so as to be spaced apart from the inner surface of the second groove, a micromirror connected to the movable unit and formed within the third groove, so as to be spaced apart from the inner surface of the third groove, input and output optical fibers formed on each side of the micromirror within the third groove and inputting and outputting light rays depending upon a displacement of the micromirror, and a coil formed on the movable unit having the elastic body formed thereon and moving the movable unit and the micromirror in a vertical direction depending upon external electrical signals, so as to control an intensity of light from the output optical fiber.

Herein, the first groove and the third groove are formed to be parallel to each other, and the second groove is formed between the first and third grooves and formed to be perpendicular to the first and third grooves.

The variable optical attenuator according to the present invention further includes a magnet formed at at least one of an upper and lower surface of the substrate and each side of the substrate, and providing a magnetic field to the coil.

Herein, the magnet is one of a permanent magnet and an electromagnet having a fine conductive wire wound thereon.

In addition, a via hole is formed on a central portion of the elastic body, and the elastic body is formed of one of a cantilever and a torsion beam.

The micromirror is formed to be perpendicular to the surface of the substrate, and the coil is formed in a spiral shape.

In the variable optical attenuator according to the present invention, the coil includes a first electrode pad and a second electrode pad, a lower conductive wire connected to the first electrode pad, an upper conductive wire connected to the second electrode pad, and a core electrically connecting the lower conductive wire and the upper conductive wire.

Also, in the present invention, a plurality of via holes is formed on the substrate, so as to correspond to each of the first groove, the second groove, and the third groove.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIGs. 1A and 1B illustrate perspective views of a variable optical attenuator using an electromagnetic micromirror according to the present invention;

FIG. 2 illustrates a plane view of the variable optical attenuator using the electromagnetic micromirror according to the present invention;

FIG. 3 illustrates the structure and the operating principle of a coil formed on a movable unit of the variable optical attenuator according to the present invention;

FIGs. 4A and 4B illustrate the electromagnetic driving of the micromirror for the operation of the variable optical attenuator according to the present invention;

FIGs. 5A and 5B illustrate perspective views showing the variable optical attenuator according to the present invention having a permanent magnet mounted thereon; and

FIGs. 6A to 6C illustrate the transmissivity of light depending upon the displacement of the micromirror on the variable optical attenuator according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

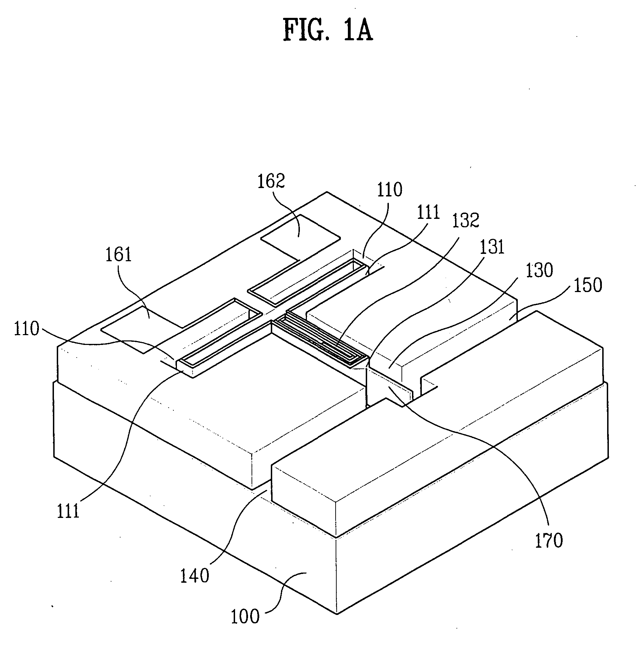

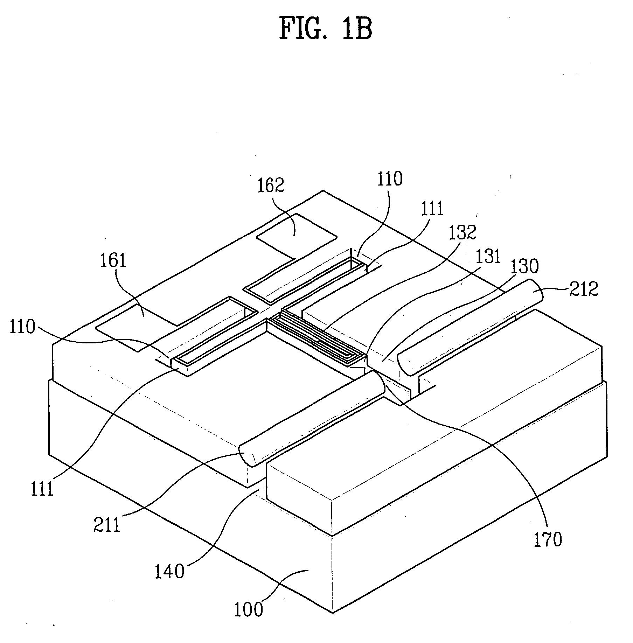

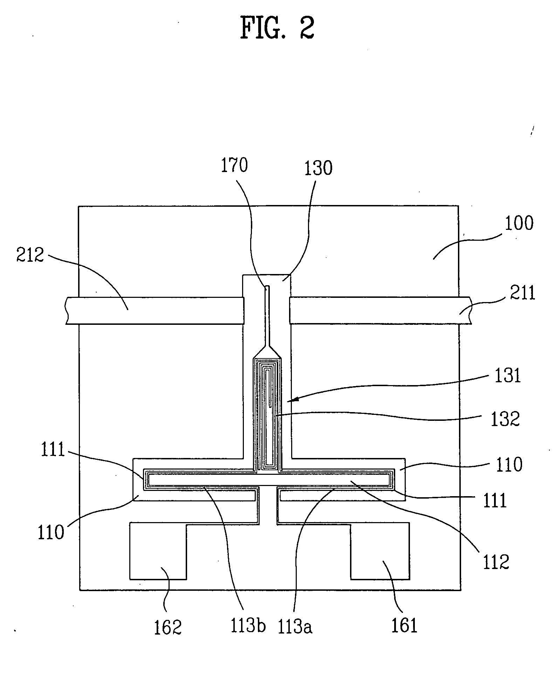

FIGs. 1A and 1B illustrate perspective views of a variable optical attenuator using an electromagnetic micromirror according to the present invention. And, FIG. 2 illustrates a plane view of the variable optical attenuator using the electromagnetic micromirror according to the present invention.

More specifically, FIG. 1A illustrates the variable optical attenuator prior to having the optical fiber mounted thereon. And, FIG. 1B illustrates the variable optical attenuator after having the optical fiber mounted thereon.

Referring to FIGs. 1A, 1B, and 2, the variable optical attenuator includes a substrate 100 having first; second, and third grooves 110, 130, and 150, an elastic body 111, a movable unit 131, a micromirror 170, input and output optical fibers 211 and 212, and a coil 132.

Herein, the first groove 110 and the third groove 150 of the substrate 100 are formed in the same direction and parallel to one another. And, the second groove 130 is formed between the first and third grooves 110 and 150 in a direction perpendicular thereto.

Also, the elastic body 111 is formed within the first groove 110 to be spaced apart from the inner surface thereof and have a lower surface connected to the substrate 100. Herein, a via hole 112 is formed in a central portion of the elastic body 111, and the elastic body 111 can be formed of a cantilever or a torsion beam.

In addition, the movable unit 131 is formed within the second groove 130 to be spaced apart from the inner surface thereof and connected to the elastic body 111. The micromirror 170 is connected to an end portion of the movable unit 131 and formed within the second groove 130 to be spaced apart from the inner surface thereof. Herein, the micromirror 170 is formed to be perpendicular to the upper surface of the substrate 100.

Moreover, the input and output optical fibers 211 and 212 are formed at each side of the micromirror 170 and within the third groove 150. Each of the input and output optical fibers 211 and 212 inputs or outputs light rays depending upon the displacement of the micromirror 170.

Subsequently, the coil 132 is formed on the movable unit 131 including the elastic body 111. The coil 132 perpendicularly drives the movable unit 131 and the micromirror 170 in accordance with an external electrical signal, so that the intensity of light rays passing through the input optical fiber 211 to the output optical fiber 212 can be controlled. Herein, the coil 132 formed in a spiral shape includes first and second electrode pads 161 and 162, a lower conductive wire 132c connected to the first electrode pad 161, an upper conductive wire 132a connected to the second electrode pad 162, and a core 132b electrically connecting the lower conductive wire 132c and the upper conductive wire 132a.

Occasionally, a plurality of via holes may be formed on the substrate 100 instead of the first, second, and third grooves 110, 130, and 150. Alternatively, a plurality of via holes may be formed on the lower surface of the substrate 100 to correspond to each of the first, second, and third grooves 110, 130, and 150. Also, the first, second, and third grooves may also be formed into trenches.

As described above, in the variable optical attenuator according to the present invention, permanent magnets are formed either on the upper and lower surfaces or on each side surfaces of the substrate 100, so as apply an external magnetic field. When an electric current is applied between the first electrode pad 161 and the second electrode pad 162, the electric current is applied to the coil 132 via electrode lines 113a and 113b. Due to an interaction between the external magnetic field of the permanent magnet and the electric current flowing through the coil 132, a torque is applied to the movable unit 131 having the coil 132 formed thereon.

Herein, the size and direction of the electromagnetic force applied to the movable unit 131 controls the direction and strength of the electric current applied to the coil 132. Also, the direction and strength of the electric current applied to the coil 132 can be controlled by the direction and size of the external magnetic field of the permanent magnet.

Also, when a displacement of the movable unit 131 occurs due to the driving of the electromagnetic force, the size of the electromagnetic force is proportional to the displacement. And, conversely, the direction of the electromagnetic force is inversely proportional to a restoring force of the elastic body 111.

Accordingly, as shown in FIG. 2, due to the displacement of the movable unit 131, the micromirror 170 formed on the upper edge of the movable unit 131 either reflects the light rays inputted from the input optical fiber 211 or allows the light to pass through the output optical fiber 212. Therefore, depending upon the position of the micromirror 170 the amount of laser light rays sent to the output optical fiber 212 from the input optical fiber 211 can be controlled in the variable optical attenuator according to the present invention.

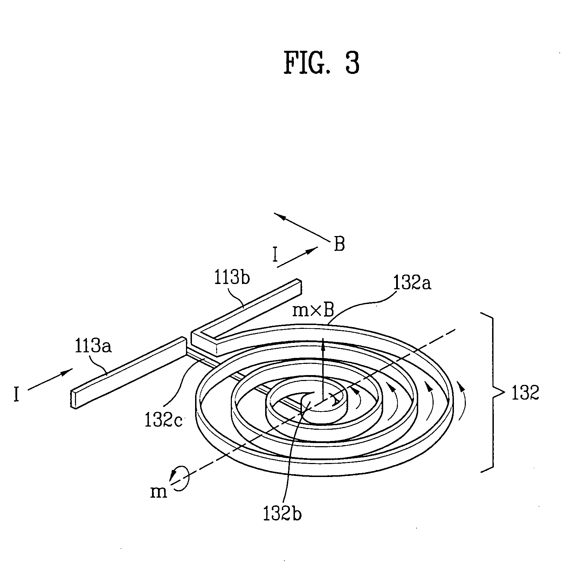

FIG. 3 illustrates the structure and the operating principle of a coil formed on a movable unit of the variable optical attenuator according to the present invention, wherein the coil 132 formed on the upper portion of the movable unit 131 includes a core 132b formed of a conductive material, an upper conductive wire 132a connected to a side of the core 132b in a spiral shape, and a lower conductive wire 132c connected to another side of the core 132b.

The upper conductive wire 132a and the lower conductive wire 132c are independently connected to the first electrode pad and the second electrode pad, respectively, through each of the electrode lines 113b and 113a. Herein, each of the upper conductive wire 132a and the lower conductive wire 132c of the core 132b is insulated with an insulating layer.

The operation principle of the coil will now be described in detail. When an electric current is flowing, the lower conductive wire 132c sends the applied electric current (*I*) from an electrode line 113b to the core 132b, which is the central portion of the coil 131. And, the electric current flows back out to another electrode line 113a through the upper conductive wire 132a, which acts as the actual coil. Conversely, when the direction of electric current is opposite to the one described above, the current flows back out through a path opposite to that of the above-described operation principle.

Therefore, as shown in FIG. 3, when a magnetic flux (B) caused by the external magnetic field is formed, an interaction occurs, in the coil, between the magnetic flux (B) and a magnetic dipole moment (*m*) caused by the electric current (*I*) flowing within the coil, thereby forming a torque of *m* × *B*. Accordingly, either the direction and size of the magnetic dipole moment (*m*) caused by the coil current (*I*) can be controlled, or by controlling the size and direction of the external magnetic field (*B*), the direction and the size of the torque acting on the movable unit and the micromirror can be controlled.

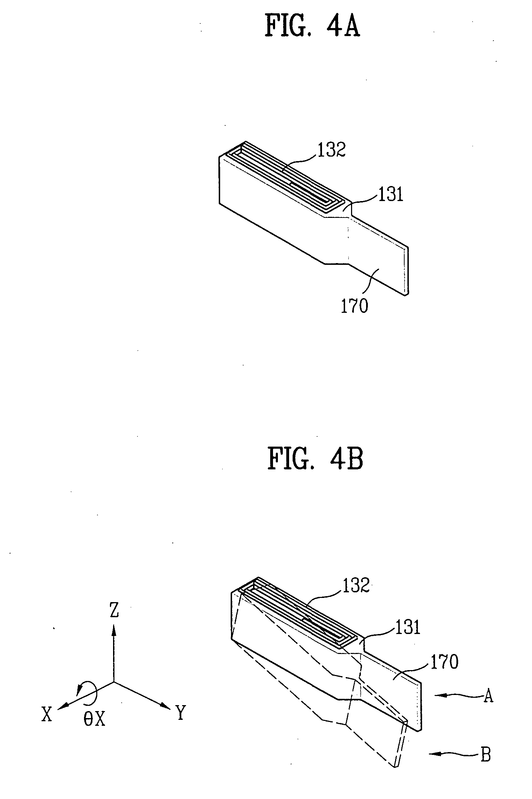

FIGs. 4A and 4B illustrate the electromagnetic driving of the micromirror for the operation of the variable optical attenuator according to the present invention.

Referring to FIG. 4A, in a state where an electric current is not applied to the coil 132, a reflecting surface of the micromirror 170 blocks the light rays inputted from the input optical fiber, thereby reflecting the light rays back to the input optical fiber. Conversely, referring to FIG. 4B, a predetermined amount of electric current is applied to the coil 132, so as to cause a displacement (*i*.*e*., from state 'A' to state 'B' shown in FIG. 4B). Consequently, the position of the micromirror 170 deviates from the optical path, thereby allowing the light rays input from the input optical fiber to pass through the output optical fiber.

At this point, when the amount of electric current applied to the coil 132 is controlled, the displacement of the movable unit 131 and the micromirror 170 can also be controlled, thereby controlling the intensity of light passing though from the input optical fiber to the output optical fiber. More specifically, due to the displacement of the movable unit 131 and the micromirror 170, a portion of or the entire light rays sent from the input optical fiber is sent to the output optical fiber.

Therefore, the variable optical attenuator according to the present invention can linearly control the amount of switched light rays.

Herein, as shown in FIG. 4B, depending upon the direction of the electric current applied to the coil 132, the movable unit 131 can either rotate to a +*qx* direction or a -*qx* direction. The variable optical attenuator according to the present invention can also be used in both driving directions.

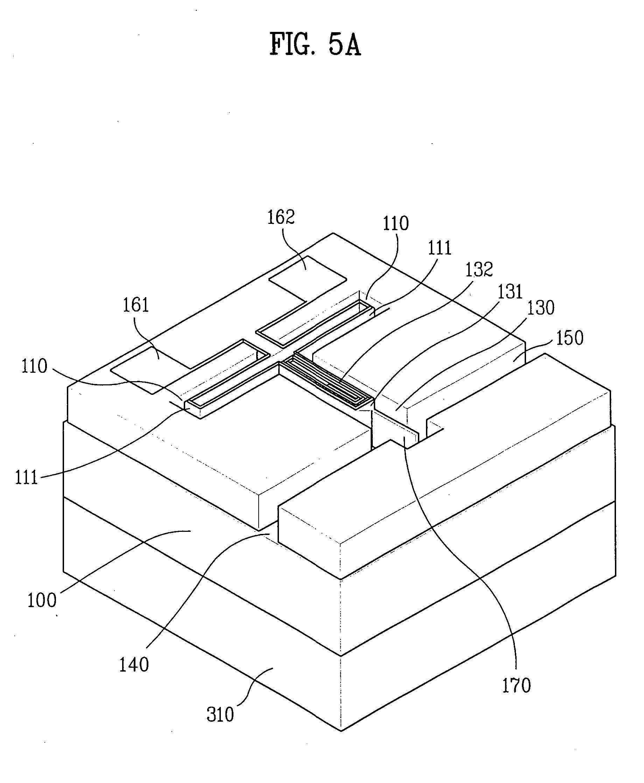

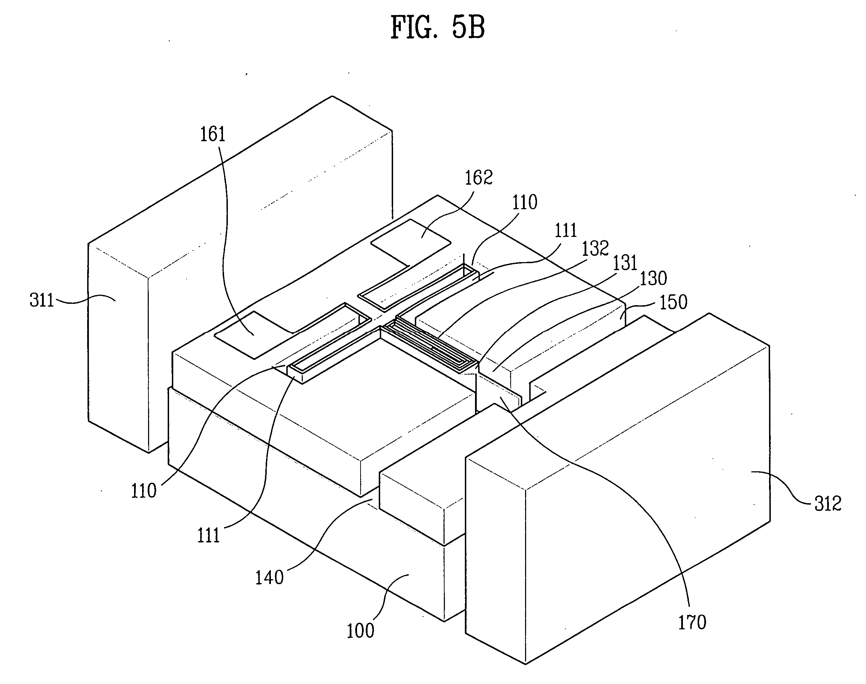

FIGs. 5A and 5B illustrate perspective views showing the variable optical attenuator according to the present invention having a permanent magnet mounted thereon.

Referring to FIG. 5A, in the variable optical attenuator, in order to supply a magnetic field to the coil, which is formed on the upper portion of the movable unit having the micromirror formed thereon, a permanent magnet 310 is mounted on the lower surface of the substrate 100. Herein, the permanent magnet 310 may also be formed on the upper surface of the substrate 100 or any one side of the substrate 100.

Alternatively, as shown in FIG. 5B, the permanent magnet 311 and 312 may also be formed on each side of the substrate 100. Similarly, two or more permanent magnets can also be simultaneously formed on the upper and lower surfaces of the substrate and/or both sides of the substrate 100.

In addition, an electromagnet formed by winding fine conductive wires may also be used, instead of the permanent magnet, in order to provide the magnetic field.

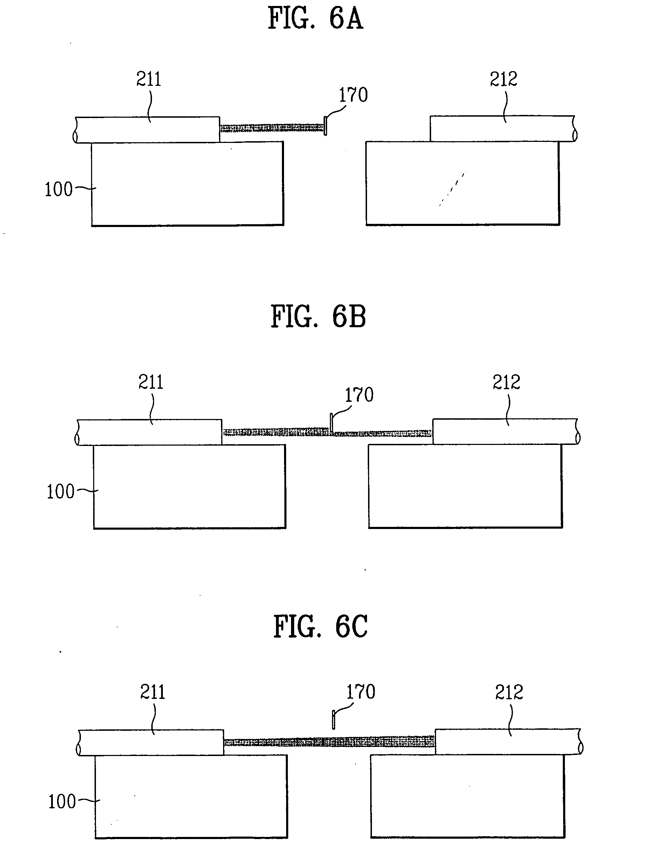

FIGs. 6A to 6C illustrate the level of optical penetration depending upon the displacement of the micromirror on the variable optical attenuator according to the present invention.

Referring to FIG. 6A, when an electric current is not applied to the coil, the variable optical attenuator becomes set at a reflecting mode, whereby the entire laser beam being outputted from the input optical fiber 211 is reflected by the micromirror 170, thereby completely blocking the beam from the output optical fiber 212.

Referring to FIGs. 6B and 6C, when an electric current is applied to the coil, the micromirror is displaced to a position deviating from the optical path. In FIG. 6B, a portion of the laser beam outputted from the input optical fiber 211 is reflected by the micromirror 170, and the remaining portion of the laser beam continues to be outputted straight through, so as to be sent to the output optical fiber 212.

Herein, the optical power of the laser beam being transmitted to the output optical fiber 212 can be controlled depending upon the displacement of the micromirror 170.

Additionally, in FIG. 6C, the micromirror 170 is completely deviated from the optical path of the laser beam outputted from the input optical fiber 211, thereby allowing the outputted laser beam to be entirely sent to the output optical fiber 212.

As described above, the variable optical attenuator according to the present invention can be formed by being expanded to an array, forming a plurality of grooves or via holes on the substrate, and, then, arranging an elastic body, a movable unit, a micromirror, and a plurality of optical fibers within the grooves or via holes.

The variable optical attenuator having the aforementioned structure can be used as a drop module for n channels of an optical add/drop multiplexer selectively connecting a random n number of input terminals and output terminals.

As described above, in the present invention, the micromirror being operated by an electromagnetic force is manufactured by using an assembly line manufacturing process and a micromachining method, thereby producing an interface component of compact size and lightweight. As a result, the unit cost for the component can be reduced, the response speed can be improved, the driving power can be lowered, and the device can be formed into a single body along with the optical fibers and other body parts.

Furthermore, in the present invention, the variable optical attenuator is expanded to an array, thereby being produced as a drop module of n channels of an optical add/drop multiplexer.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

The claims refer to examples of preferred embodiments of the invention. However, the invention also refers to combinations of any claim or claims with any other claim or claims and/or with any feature or combination of features which is or are disclosed in the description and/or in the drawings.

## Claims

1. A variable optical attenuator, comprising:
a substrate having a first groove, a second groove, and a third groove;
an elastic body connected to a surface of the substrate and formed within the first groove, so as to be spaced apart from the inner surface of the first groove;
a movable unit connected to the elastic body and formed within the second groove, so as to be spaced apart from the inner surface of the second groove;
a micromirror connected to the movable unit and formed within the third groove, so as to be spaced apart from the inner surface of the third groove;
input and output optical fibers formed on each side of the micromirror within the third groove and inputting and outputting light rays depending upon a displacement of the micromirror; and
a coil formed on the movable unit having the elastic body formed thereon and moving the movable unit and the micromirror in a vertical direction depending upon external electrical signals, so as to control an intensity of light from the output optical fiber.

2. The attenuator according to claim 1, wherein the first groove and the third groove are formed to be parallel to each other.

3. The attenuator according to claim 1, wherein the second groove is formed between the first and third grooves and formed to be perpendicular to the first and third grooves.

4. The attenuator according to claim 1, further comprising a magnet formed at at least one of an upper and lower surface of the substrate and each side of the substrate, and providing a magnetic field to the coil.

5. The attenuator according to claim 4, wherein the magnet is one of a permanent magnet and an electromagnet having a fine conductive wire wound thereon.

6. The attenuator according to claim 1, wherein a via hole is formed on a central portion of the elastic body.

7. The attenuator according to claim 1, wherein the elastic body is formed of one of a cantilever and a torsion beam.

8. The attenuator according to claim 1, wherein the micromirror is formed to be perpendicular to the surface of the substrate.

9. The attenuator according to claim 1, wherein the coil is formed in a spiral shape.

10. The attenuator according to claim 1, wherein the coil includes:
a first electrode pad and a second electrode pad;
a lower conductive wire connected to the first electrode pad;
an upper conductive wire connected to the second electrode pad; and
a core electrically connecting the lower conductive wire and the upper conductive wire.

11. The attenuator according to claim 1, wherein a plurality of via holes are formed on the substrate, so as to correspond to each of the first groove, the second groove, and the third groove.
